# EUROPEAN PATENT SPECIFICATION

(11) **EP 0 738 343 B1**
(45) Date of publication and mention of the grant of the patent: **29.09.1999**
(21) Application number: 92910608.6
(22) Date of filing: 05.02.1992
(51) Int. Cl.: D21C 11/00, D21C 11/06, D21C 11/14, D21C 11/12

(54) **A METHOD OF RECOVERING ENERGY AND CHEMICALS FROM BLACK LIQUOR**
VERFAHREN ZUR GEWINNUNG VON ENERGIE UND CHEMIKALIEN AUS SCHWARZLAUGE
PROCEDE DE RECUPERATION D'ENERGIE ET DE PRODUITS CHIMIQUES A PARTIR DE LIQUEUR NOIRE

(30) Priority: 06.02.1991 US 651462
(43) Date of publication of application: 23.10.1996
(73) Proprietor: Ahlstrom Machinery Oy, 00440 Helsinki (FI)
(72) Inventor: RYHAM, Rolf, Suwanee, GA 30174 (US); Smith, James W.,, Toronto, Ontario M58 1A4 (CA)
(74) Representative: Hansen, Bernd, Dr. Dipl.-Chem.
(86) International application number: US9200924
(87) International publication number: WO9213994

(56) References cited:
- US-A- 3 607 619
- US-A- 3 718 446
- US-A- 3 762 989
- US-A- 3 944 462
- US-A- 4 373 109
- US-A- 4 431 617
- US-A- 4 513 164
- US-A- 4 851 600
- US-A- 4 919 914
- US-A- 4 929 307
- US-A- 4 953 607

## Description

### BACKGROUND AND SUMMARY OF THE INVENTION

Wood is treated in sulfate cooking by white liquor containing NaOH and Na₂S, whereby lignin is dissolved and cellulose fibers are released. The mixture of cellulose fibers (pulp) and cooking chemicals, mainly containing sodium hydroxide and sodium sulfide, is treated with water, whereby black liquor is generated. The black liquor is concentrated by evaporation. The concentrated black liquor is combusted in a soda recovery boiler and the chemical melt thus produced and mainly containing Na₂S and Na₂CO₃ is dissolved in water, whereby green liquor is generated. The green liquor is causticized by caustic lime (CaO) to yield white liquor containing Na₂S and NaOH. Another product of the causticizing process is lime sludge mainly formed by CaCO₃. White liquor is transferred to a digester house and the lime sludge is calcinated in a lime sludge reburning kiln to caustic lime being reutilized in the causticizing.
Sulfur emissions are generated in a sulfate cellulose mill mainly in the soda recovery boiler, the evaporation plant and the digester house. In order to decrease the environmental impact of the sulfur the emissions thereof should be minimized. It has been noted that the increase of the dry solids content of black liquor decreases the sulfur emissions of a soda recovery boiler. On the other hand, the sulfur content of green liquor increases due to the above and thus the sulfidity of white liquor as well as the sulfur content of the black liquor are also increased. It can also be assumed that the sulfur emissions of the evaporation plant increase due to the higher sulfur content of the black liquor.
Finnish published application 75615 (US Pat. No. 4,929,307) teaches that the viscosity of the black liquor can be decreased by heat treating the black liquor at a temperature higher than its cooking temperature. Due to this it is possible to evaporate black liquor to a higher dry solids content, whereby the sulfur emissions of a soda recovery boiler are decreased.
It is appreciated from US Patent 2,711,430 to heat black liquor to thereby release organic sulfur compounds.
Co-pending US Patent Application Serial No. 614,722 discloses a method for removing sulfur from black liquor. The black liquor is heated preferably before the last effect of the evaporation at a temperature higher than the cooking temperature and the sulfidity of white liquor is adjusted by adjusting the temperature and/or retention time of the heat treatment so that a desired amount of sulfur compounds, such as organic sulfur compounds, including mainly dimethyl sulfide and methyl mercaptan, are separated from the gaseous black liquor.
In the heat treatment of black liquor the long lignin/saccharide chains are split and the methoxy groups in the black liquor will form dimethyl sulfide (DMS) as a byproduct. Approximately 4-6 weight-% of the dry solids of the black liquor can potentially become gas containing dimethyl sulfide.

Surprisingly, it has been noted that the above-mentioned phenomena can be utilized in a completely new manner.

According to the present invention, a method is provided for treatment of black liquor generated in a sulfate pulping process to recover energy and chemicals therefrom, in which method
(a) the black liquor is heated at a temperature and for a time period such that substantial volumes of off gases containing organic sulfur compounds are produced;
(b) the heated black liquor is treated in a recovery boiler to recover cooking chemicals therefrom for utilization of the chemicals in the sulfate pulping process;
(c) generating hydrogen sulfide from the off gases; and
(d) utilizing at least some of the generated hydrogen sulfide in the sulfate pulping process.

The apparatus according to the present invention comprises
means for heating the black liquor for a period of time so as to generate off gases containing organic sulfur compounds;
means connected to the heating means for recovering chemicals from heat treated black liquor to produce white liqour, said means including a recovery boiler;
means connected to the heating means for generating hydrogen sulfide from the organic sulfur compounds contained in the off gases;
means connected to the hydrogen sulfide generating means for controlling the sulfidity of white liquor and for separating the methane from the hydrogen sulfide by selectively passing the methane and the hydrogen sulfide into contact with the white liquor; and
means connected to the sulfidity control means for feeding the white liquor of controlled sulfidity to the cooking stage of a sulfate pulping process.

The generated hydrogen sulfide can be separated from the gas stream by absorption in NaOH solution or in white liquor prior to the cooking stage. Thus it is possible to increase and control the sulphidity of white liquor. This is very advantageous, because a higher sulfide concentration in white liquor produces kraft pulp with a higher viscosity and better physical properties.

Alternatively, the H₂S can be absorbed in an amine absorber or similar device. An alternative to absorption is separation by compression and successive partial condensation. The hydrogen sulfide separated can be used for many purposes, for instance, it can be converted into elementary sulfur in a process similar to the Claus process. The sulfur formed is fed back into the heat treatment reactor, in which the black liquor is treated, to enhance the formation of new dimethyl sulfide or the sulfur is purged from the system as crystalline sulfur.

At least some of the produced H₂S is used in the pulping process to considerably improve the pulping yield by pre-impregnation of H₂S into the wood-chips before the alkaline delignification process. Preferably the off gases are treated in such a way that in addition to hydrogen sulfide methane is also produced. The methane produced can be used, for instance, to substitute the fuel normally used in the lime reburning operation. A part of the off gases can, if required, be treated in such a way that other compounds than hydrogen sulfide are produced, for example, sulfur dioxide. By means of the present method the removal of the sulfur from the black liquor and the recycling of the sulfur in the kraft liquor recovery process are improved. A substantial portion of sulfur can bypass the soda recovery boiler and the sulfur recovered can be returned to the pulping process, for instance, to cooking liquors.

It is now also possible to partially convert black liquor to usable fuel, which can be used in pulping operations, e.g. in lime kilns, or outside such operations. It can also be used in a separate superheater of the soda recovery boiler or in other boilers.

When sulfur is separated from black liquor, in the manner described, before it is supplied to the soda recovery boiler, the dry solids flow flowing into the boiler can decrease by about 10% (corresponding to an increase in throughput of the recovery boiler by about 10%) and, at the same time, the net heat content of the black liquor is reduced. In other words, the load of the boiler as well as the amount of sulfur to be processed are decreased.

By adjusting the temperature and/or retention time of the heat treatment it is possible to adjust the amount of the dimethyl sulfide and other organic sulfur compounds exiting from the black liquor. The formation of dimethyl sulfide can be adjusted also by feeding sulfur to the heat treatment reactor.

The heat treatment is carried out as pressure heating at a temperature of approximately 170-350°C, preferably higher than 190°C, and more preferably between 190 and 290°C. The treatment time depends on the temperature and the quality of the liquor. The retention time is typically about 1-60 minutes in order to generate gas including sulfur compounds to a significant extent. The treatment can always be carried out when the removal of sulfur from black liquor is desired. Preferably, the treatment is carried out prior to the final evaporation.

### BRIEF DESCRIPTION OF THE DRAWINGS

The invention is further described below by way of example with reference to the accompanying drawings, in which:
FIG. 1 is a schematic diagram illustrating the method of improving the utilization of sulfur compounds in the kraft pulping process in accordance with the present invention;
FIG. 2 is a diagram illustrating a method for separating hydrogen sulfide from methane in the method of FIG. 1; and
FIG. 3 is another schematic illustration of yet a further method for separating hydrogen sulfide from methane in the method of FIG. 1.

### DETAILED DESCRIPTION OF THE PRESENTLY PREFERRED EMBODIMENTS

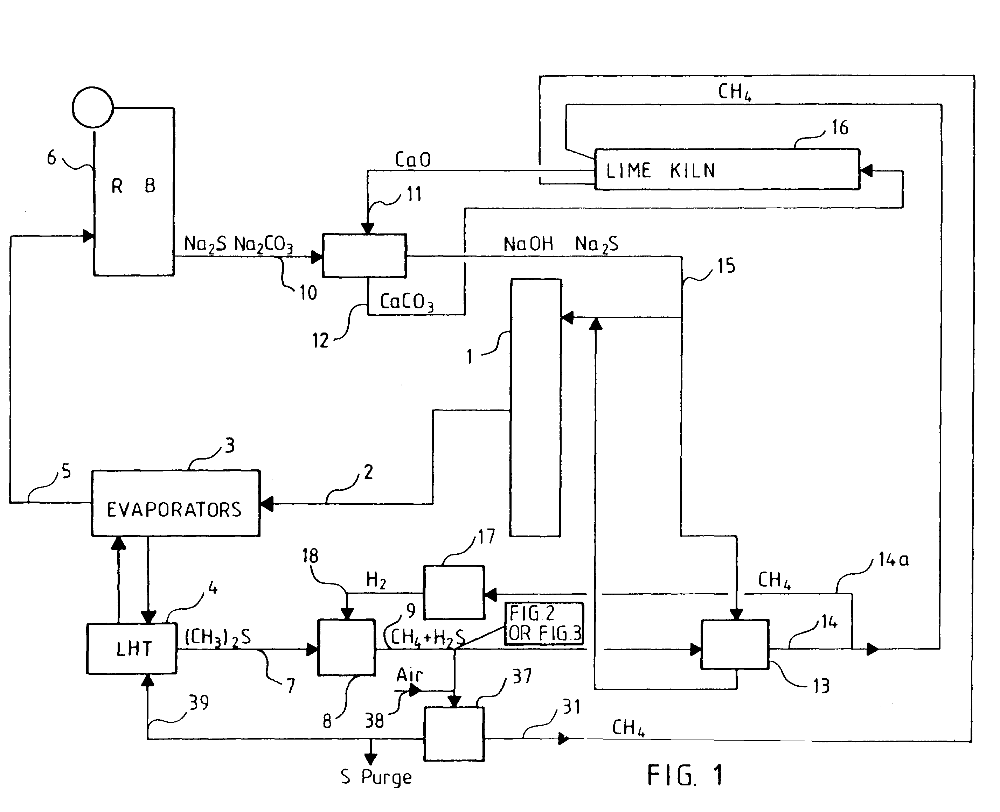

In Fig. 1 the weak black liquor is fed from a digester house 1 through line 2 to, and is evaporated in, for instance, a multiple effect evaporating system 3 in accordance with US Patent 4,953,607 the entire disclosure of which is hereby incorporated by reference. The lignin in the liquor to be evaporated is split by a heat treatment, that is, by heating the black liquor under pressure for a predetermined time, in a reactor vessel 4, whereby gases containing organic sulfur compounds are generated. At temperatures over 200°C the amount of sulfur exiting from the black liquor can be 30-65% of all sulphur contained in the black liquor. The heat treatment is carried out under water pressure, i.e. at pressures varying from about 8 bars to 165 bars, preferably from about 12 bars to 80 bars. Suitable temperatures for the heat treatment range from about 170-350°C and preferably from 190-290°C. At these temperatures substantially all of the organic sulfur compounds, which are formed in the black liquor during the heat treatment, are liberated in form of gas. For example, at a temperature of 280°C this gas contains about 65% dimethyl sulfide, about 34% methyl mercaptan and 1% hydrogen sulfide.

The objective of the pressure heating is, on one hand, to decrease the viscosity of the black liquor to be concentrated thereby improving the evaporation and treatment abilities of the liquor, and, on the other hand, to remove sulfur therefrom. The heat treatment causes the splitting of the lignin in the black liquor, which, in turn, results in a decrease of the viscosity thereof. At the same time methoxy groups of lignin split off, thereby generating dimethyl sulfide (DMS).

The concentrated black liquor is transferred through line 5 to a soda recovery boiler 6 for combustion therein. The chemical melt thus produced and mainly containing Na₂S and Na₂CO3 is dissolved in water, whereby green liquor in line 10 is generated. The green liquor is thereafter causticized in a suitable vessel with lime (CaO) added through line 11 to form white liquor exiting through line 15, and which is transferred to the digester 1 or for further treatment. The lime mud also formed during the causticizing step is fed through line 12 to a lime kiln to be calcined therein to recover the lime therefrom.

Dimethyl sulfide (DMS) formed during the above described heat treatment of the black liquor in reactor vessel 4 is fed through line 7 into hydroconverter 8 and reduced therein to methane and hydrogen sulfide. This reduction of DMS is achieved with H₂ or CO + H₂ at a temperature of about 300°C H₂S can be separated from the gas mixture (CH₄ and H₂S) contained in line 9 by absorption thereof in a white liquor scrubber 13, whereby a substantially sulfur-free CH₄ gas is produced. H₂S reacts with NaOH as follows: 2 CH₄ + H₂S + 2NaOH → Na₂S + 2CH₄ + 2H₂O.

The white liquor added through line 15 absorbs the sulfur compounds in scrubber 13 which liquor can thereafter be returned to the digester 1 to increase the sulfidity and thus improve the pulp quality.

A portion of the methane gas is fed through line 14 to a lime kiln 16 to substitute the fuel normally used therein. Another portion of the methane is fed through line 14a, after the white liquor scrubber, to a converter 17 and is converted therein to carbon monoxide and hydrogen through sub-stoichiometric combustion, which is a conventional method. The hydrogen and carbon monoxide 18 are fed to hydroconverter 8 to be used therein to reduce the dimethyl sulfide to methane and hydrogen sulfide.

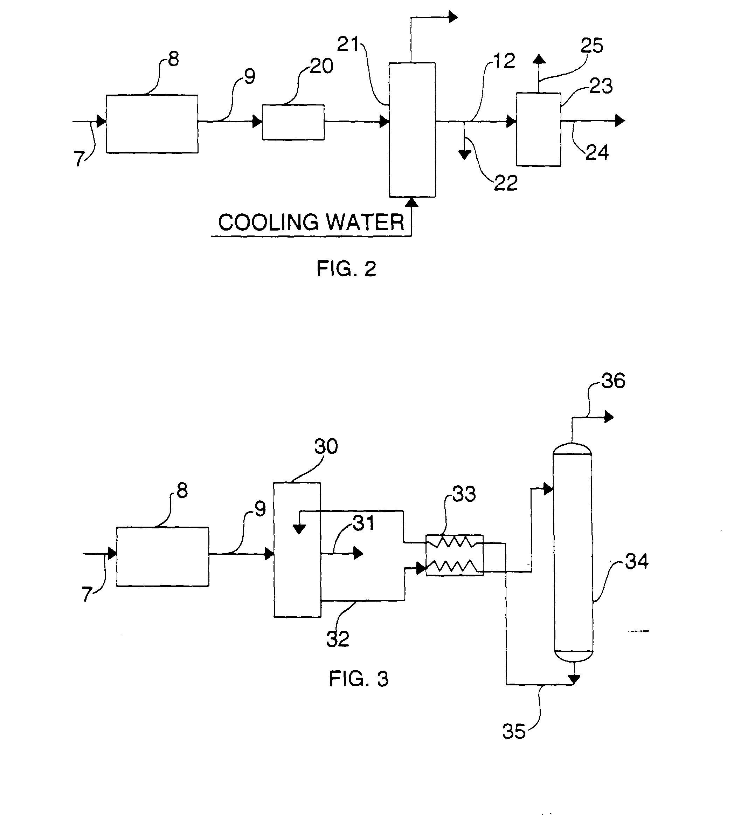

Alternatively to absorbing the hydrogen sulfide as described, the H₂S can also be separated by compression and partial condensation as illustrated in Fig. 2. The gas mixture containing methane and hydrogen sulfide is compressed in a pressure apparatus 20 to a pressure of at least 20 bar and partially condensed in condenser 21 so that most of the hydrogen sulfide 22 is separated from the methane. The produced H₂S exiting therefrom through line 22 can be used in the pulping process to considerably improve the pulping yield by pre-impregnating the wood-chips with H₂S before the alkaline delignification process. The production increase based on fiber production is at least 10-12%. The remainder of the gas mixture is transferred through line 12 to an absorber 23 and absorbed therein using methanol as an absorbent, thereby separating the remaining hydrogen sulfide from the methane. The free methane gas in line 25 can then be used in the lime kiln as fuel as described above.

Alternatively the gas mixture containing methane and hydrogen sulfide after the hydrogen converter 8 can also be treated by absorption as follows. The hydrogen sulfide is separated from the methane by absorbing it into an amine solution containing methylamine in an amine scrubber 30 as illustrated in Fig. 3. The methane exiting from the scrubber is transferred through line 31 to the lime kiln 16 to be used as a fuel. The amine sclution containing the hydrogen sulfide is transferred through line 32 to an amine stripper 34, wherein the hydrogen sulfide is separated by the addition of steam. The amine solution in line 35 which is free from H₂S is fed back to scrubber 30 through a heat exchanger 33, in which the solution coming from the scrubber is preheated. The hydrogen sulfide exiting from the stripper 34 through line 36 can be utilized as described earlier.

Further, a part of hydrogen sulfide can be oxidized to elementary sulfur according to processes similar to the Claus process, such as the method described in US Patent No. 4,919,914 which is also incorporated herein in its entirety by reference. Also, the gas mixture in line 9 after the hydroconverter 8 can be treated by this method. This method is based on the principle of using Fe as a catalyst to convert H₂S to S and H₂O in a flotation cell. The hydrogen sulfide containing gas stream in line 9 (Fig. 1) is continuously fed to a reaction zone in an agitated flotation cell 37 which contains an aqueous medium and as a hydrogen sulfide oxidizing catalyst, chelatic ferric hydroxide dissolved in the aqueous medium. A separate oxygen-containing gas stream, usually air is continuously fed through line 38 to the reaction medium. The process proceeds according to the reaction: H₂S + 1/2 O₂ → H₂O + S. The sulfur particles which are formed in the oxidation reaction are continuously transported to the surface of the aqueous medium from which the sulfur can easily be recovered. The sulfur formed is fed back through line 39 to the heat treatment reactor 4 to enhance the formation of new dimethyl sulfide or is withdrawn from the system as crystalline sulfur. If the gas mixture contained methane, the methane is separated therefrom and transferred to the lime kiln through line 31.

It should be understood that the preferred embodiments and examples described are for illustrative purposes only and are not to be construed as limiting the scope of the present invention which is properly delineated only in the appended claims.

## Claims

1. A method of treating black liquor generated in a sulfate pulping process to recover energy and chemicals therefrom, characterized in that
(a) the black liquor is heated at a temperature and, for a time period such that substantial volumes of off gases containing organic sulfur compounds and heated black liquor are produced;
(b) the heated black liquor is treated in a recovery boiler to recover cooking chemicals therefrom for utilization of the chemicals in the sulfate pulping process;
(c) hydrogen sulfide is generated from the off gases; and
(d) at least some of the generated hydrogen sulfide is utilized in the sulfate pulping process.

2. The method in accordance with claim 1, further characterized in that in step (c) hydrogen sulfide and methane are generated.

3. The method in accordance with claim 1 or 2, further characterized in that step (d) is practiced by bringing the generated hydrogen sulfide into contact with white liquor, and then using the white liquor in the sulfate pulping process.

4. The method in accordance with claim 1 or 2, characterized by the further step of converting some of the hydrogen sulfide from step (c) into elementary sulfur.

5. The method in accordance with claim 4, characterized in that the black liquor heating is practiced in a heat treatment reactor, and the sulfur is fed back to said heat treatment reactor vessel to enhance the formation of dimethyl sulfide therein.

6. The method according to claim 1, further characterized in that the black liquor heating is practiced at a temperature of about 170-350° C, preferably at about 190-290° C, for a time period of about 1-60 minutes.

7. The method in accordance with claim 2, further characterized by the step (e) of separating the hydrogen sulfide from the methane.

8. The method according to claim 7 further characterized in that steps (d) and (e) are practiced by passing a mixture of methane and hydrogen sulfide into contact with white liquor to absorb the hydrogen sulfide into the white liquor to selectively control the sulfur content of the white liquor, and then using the white liquor in a sulfate cooking step.

9. The method according to claim 7 further characterized in that step (e) is practiced by compression and successive partial condensation, or by absorbing the hydrogen sulfide in an amino absorber.

10. The method according to claim 7, wherein the pulping process includes a lime reburning kiln; and the methane from step (e) is utilized as fuel in the lime reburning kiln.

11. The method according to claim 2, characterized in that step (c) is practiced in a hydroconverter.

12. Apparatus for utilizing black liquor from a sulfate pulping process comprising:
means for heating black liquor for a period of time so as to generate off gases containing organic sulfur compounds;
means connected to the heating means for recovering chemicals from heat treated black liquor to produce white liqour, said means including a recovery boiler;
means connected to the heating means for generating hydrogen sulfide from the organic sulfur compounds contained in the off gases;
means connected to the hydrogen sulfide generating means for controlling the sulfidity of white liquor and for separating the methane from the hydrogen sulfide by selectively passing the methane and the hydrogen sulfide into contact with the white liquor; and
means connected to the sulfidity control means for feeding the white liquor of controlled sulfidity to the cooking stage of a sulfate pulping process.

## Patentansprüche

1. Verfahren zur Behandlung von Schwarzlauge, die bei einem Sulfataufschlußprozeß erzeugt wird, um Energie und Chemikalien daraus zurückzugewinnen, dadurch **gekennzeichnet**, daß
(a) die Schwarzlauge auf einer Temperatur und eine Zeit lang derart erhitzt wird, daß wesentliche Volumen an organische Schwefelverbindungen enthaltenden Abgasen und erhitzte Schwarzlauge produziert werden;
(b) die erhitzte Schwarzlauge in einem Rückgewinnungskessel behandelt wird, um Aufschlußchemikalien daraus zur Verwertung der Chemikalien beim Sulfataufschlußprozeß zurückzugewinnen;
(c) Wasserstoffsulfid aus den Abgasen erzeugt wird; und
(d) zumindest ein Teil des erzeugten Wasserstoffsulfids im Sulfataufschlußprozeß verwendet wird.

2. Verfahren nach Anspruch 1, weiters dadurch **gekennzeichnet**, daß in Schritt (c) Wasserstoffsulfid und Methan erzeugt werden.

3. Verfahren nach Anspruch 1 oder 2, weiters dadurch **gekennzeichnet**, daß Schritt (d) durchgeführt wird, indem das erzeugte Wasserstoffsulfid in Kontakt mit Weißlauge gebracht wird und die Weißlauge dann im Sulfataufschlußprozeß verwendet wird.

4. Verfahren nach Anspruch 1 oder 2, **gekennzeichnet** durch den weiteren Schritt zur Umsetzung von einem Teil des Wasserstoffsulfids von Schritt (c) zu elementarem Schwefel.

5. Verfahren nach Anspruch 4, dadurch **gekennzeichnet**, daß das Erhitzen der Schwarzlauge in einem Wärmebehandlungsreaktor ausgeführt wird und der Schwefel zurück zum Wärmebehandlungsreaktorgefäß geleitet wird, um das Bilden von Dimethylsulfid darin zu verbessern.

6. Verfahren nach Anspruch 1, weiters dadurch **gekennzeichnet,** daß das Erhitzen der Schwarzlauge bei einer Temperatur von ungefähr 170-350 °C, vorzugsweise bei ungefähr 190-290 °C, ungefähr 1-60 Minuten lang durchgeführt wird.

7. Verfahren nach Anspruch 2, weiters **gekennzeichnet** durch den Schritt (e) zur Abtrennung des Wasserstoffsulfids vom Methan.

8. Verfahren nach Anspruch 7, weiters dadurch **gekennzeichnet**, daß die Schritte (d) und (e) durchgeführt werden, indem eine Mischung aus Methan und Wasserstoffsulfid in Kontakt mit Weißlauge geleitet wird, um das Wasserstoffsulfid in die Weißlauge zu absorbieren, um den Schwefelgehalt der Weißlauge selektiv zu kontrollieren, und die Weißlauge dann in einem Sulfataufschlußschritt verwendet wird.

9. Verfahren nach Anspruch 7, weiters dadurch **gekennzeichnet,** daß Schritt (e) durch Verdichtung und anschließende partielle Kondensation oder durch Absorbieren des Wasserstoffsulfids in einen Aminoabsorbierer durchgeführt wird.

10. Verfahren nach Anspruch 7, dadurch **gekennzeichnet**, daß der Aufschlußprozeß einen Kalkrückverbrennungsofen umfaßt; und das Methan von Schritt (e) als Brennstoff im Kalkrückverbrennungsofen verwendet wird.

11. Verfahren nach Anspruch 2, dadurch **gekennzeichnet**, daß Schritt (c) in einem Hydrokonverter durchgeführt wird.

12. Vorrichtung zur Nutzung von Schwarzlauge aus einem Sulfataufschlußprozeß, bestehend aus:
- Mitteln zur Heizung von Schwarzlauge eine Zeitlang, um organische Schwefelverbindungen enthaltende Abgase zu erzeugen,
- mit den Heizmitteln verbundenen Mitteln zur Rückgewinnung von Chemikalien aus heißer, behandelter Schwarzlauge, um Weißlauge zu erzeugen, welche Mittel einen Rückgewinnungskessel umfassen;
- mit den Heizmitteln verbundenen Mitteln zur Erzeugung von Wasserstoffsulfid aus den in den Abgasen enthaltenen organischen Schwefelverbindungen;
- mit den Wasserstoffsulfiderzeugungsmitteln verbundenen Mitteln zur Regelung der Sulfidität von Weißlauge und zur Abtrennung des Methans vom Wasserstoffsulfid durch selektives Leiten des Methans und des Wasserstoffsulfids in Kontakt mit der Weißlauge; und
- mit den Wasserstoffsulfiderzeugungsmitteln verbundenen Mitteln zur Zuführung der Weißlauge kontrollierter Sulfidität zur Aufschlußstufe eines Sulfataufschlußprozesses.

## Revendications

1. Procédé de traitement de la liqueur noire produite au cours d'un procédé de réduction en pâte au sulfate afin d'en récupérer de l'énergie et des substances chimiques, caractérisé en ce que :
a) la liqueur noire est chauffée à une température et durant une période telles qu'on produit des volumes sensibles d'effluents gazeux contenant des composés sulfurés organiques et de la liqueur noire chauffée;
b) la liqueur noire chauffée est traitée dans une chaudière de récupération afin d'en récupérer des substances chimiques de cuisson pour l'utilisation des substances chimiques au cours du processus de réduction en pâte au sulfate;
c) du sulfure d'hydrogène est produit à partir des effluents gazeux; et
d) au moins une partie du sulfure d'hydrogène produit est utilisée dans le processus de réduction en pâte au sulfate.

2. Procédé selon la revendication 1, caractérisé en outre en ce que dans l'étape (c), on produit du sulfure d'hydrogène et du méthane.

3. Procédé selon la revendication 1 ou 2, caractérisé en outre en ce que l'étape (d) est mise en oeuvre en amenant le sulfure d'hydrogène produit au contact d'une liqueur blanche, et ensuite en utilisant la liqueur blanche dans le processus de réduction en pâte au sulfate.

4. Procédé selon la revendication 1 ou 2, caractérisé par l'étape ultérieure consistant à convertir une partie du sulfure d'hydrogène issu de l'étape (c) en soufre élémentaire.

5. Procédé selon la revendication 4, caractérisé en ce que le chauffage de la liqueur noire est mis en oeuvre dans un réacteur de traitement thermique, et en ce que le soufre est délivré de nouveau dans ladite enceinte du réacteur de traitement thermique afin d'y augmenter la formation de diméthylsulfure.

6. Procédé selon la revendication 1, caractérisé en outre en ce que le chauffage de la liqueur noire est mis en oeuvre à une température de l'ordre de 170 - 350°C, de préférence de l'ordre de 190 - 290°C, pour une période de 1 à 60 minutes environ.

7. Procédé selon la revendication 2, caractérisé en outre par l'étape (e) consistant à séparer le sulfure d'hydrogène du méthane.

8. Procédé selon la revendication 7, caractérisé en outre en ce que les étapes (d) et (e) sont mises en oeuvre en amenant un mélange du méthane et du sulfure d'hydrogène au contact d'une liqueur blanche afin d'absorber le sulfure d'hydrogène dans la lessive blanche pour commander, d'une manière sélective, la teneur en soufre de la liqueur blanche, et ensuite en utilisant la lessive blanche au cours d'une étape de cuisson au sulfate.

9. Procédé selon la revendication 7, caractérisé en outre en ce que l'étape (e) est mise en oeuvre par compression et par condensation partielle successive, ou par absorbtion du sulfure d'hydrogène dans un amino-absorbeur.

10. Procédé selon la revendication 7, dans lequel le processus de réduction en pâte inclut un four de recombustion de la boue résiduaire de chaux; et le méthane issu de l'étape (e) est utilisé dans le four de recombustion de boues de chaux.

11. Procédé selon la revendication 2, caractérisé en ce que l'étape (c) est mise en oeuvre dans un variateur hydraulique.

12. Dispositif pour utiliser une liqueur noire issue d'un processus de réduction en pâte au sulfate comprenant :
- des moyens pour chauffer une liqueur noire pendant une période de temps afin de produire des effluents gazeux contenant des composés sulfurés organiques;
- des moyens raccordés aux moyens de chauffage afin de récupérer des substances chimiques issues de la liqueur noire traitée à chaud pour produire une liqueur blanche, lesdits moyens comprenant une chaudière de récupération;
- des moyens raccordés aux moyens de chauffage pour produire du sulfure d'hydrogène à partir des composés sulfurés organiques contenus dans les effluents gazeux;
- des moyens raccordés aux moyens de production du sulfure d'hydrogène afin de commander la sulfidité d'une liqueur blanche et pour séparer le méthane du sulfure d'hydrogène en amenant, d'une manière sélective, le méthane et le sulfure d'hydrogène au contact de la liqueur blanche; et
- des moyens raccordés à des moyens de commande de sulfidité pour délivrer la liqueur blanche de sulfidité commandée dans l'étape de cuisson d'un processus de réduction en pâte au sulfate.
